# EUROPÄISCHE PATENTSCHRIFT

(11) **EP 1 273 812 B1**
(45) Veröffentlichungstag und Bekanntmachung des Hinweises auf die Patenterteilung: **28.12.2005**
(21) Anmeldenummer: 02012867.4
(22) Anmeldetag: 11.06.2002
(51) Int. Cl.: F16C 25/08

(54) **Spielfreies Radialkugellager**
Playless radial ball bearing
Palier à billes radial sans jeu

(30) Priorität: 04.07.2001 DE 10132470
(43) Veröffentlichungstag der Anmeldung: 08.01.2003
(73) Patentinhaber: INA-Schaeffler KG, 91074 Herzogenaurach (DE)
(72) Erfinder: Lutz, Rainer, 91459 Markt Erlbach (DE); Zernickel, Alexander, 91074 Herzogenaurach (DE); Nützel, Reinhold, 91325 Adelsdorf (DE); Erhardt, Herbert, 91074 Herzogenaurach (DE)

(56) Entgegenhaltungen:
- DE-A- 4 114 643
- DE-A- 4 231 272
- DE-A- 19 951 388
- DE-C- 4 393 663

## Beschreibung

### Anwendungsgebiet der Erfindung

Die Erfindung betrifft ein spielfreies Radialkugellager nach dem Oberbegriff von Anspruch 1, siehe DE 4231272 A1.

### Hintergrund der Erfindung

Aus der DE 41 08 827 C2 ist ein spielfreies Kugellager bekannt, dass nach einer gemäß Figur 7 beschriebenen Ausführungsform aus zwei äußeren Lagerringen besteht, die axial voneinander beabstandet sind und eine gemeinsame Außenlaufbahn bilden. Die Spielfreiheit wird durch eine Wellfeder realisiert, die einerseits an einem radial nach innen gerichteten Flansch einer Außenhülse und andererseits an einem der äußeren Lagerringe anliegt. Äußere Lagerringe und Federelement werden von der genannten Äußenhülse zu einer unverlierbaren Baueinheit zusammengehalten, die die genannten Teile beidseitig mit je einem radial nach innen gerichteten Flansch umfasst.

Auch aus der DE 41 14 643 C2 ist ein Lenkungslager vorbekannt, bei dem der äußere Lagerring von zwei Teilringen gebildet ist, die eine gemeinsame Außenlaufbahn bilden. Beide äußeren Lagerringe einschließlich der für Spielfreiheit sorgenden Wellfeder werden von einer Außenhülse umschlossen, die die genannten Bauteile mit je einem beidseitig angeordneten radial nach innen weisenden Flansch umfasst.

Auch ist aus der DE 43 93 663 C1 ein Lenkungslager bekannt. Das für Spielfreiheit sorgende Federelement ist in diesem Falle als ein aus einem polymeren Werkstoff gefertigter Ring ausgebildet.

Schlieblich ist aus der DE 42 31 272 A1 ein kugellager bekannt, dessen aüberer Lagerring aus zwei Teilringen zusammengesetzt ist, wobei diese von einem Federelement in Form eines Spannringes mit einer axialen Kraft beaufschlagt sind Dieser Spannring ist in eine Außenhülse aus kunststoff eingesetzt welche den zweigeteilten Lager außenring radial umfaßt. Der axiale zusammen halt der Baueinheit erfolgt durch den eingeschnappten Spannring und durch eine Schulter der Außenhülse. Hierber ist von Nachteil, dass die Montage aufgrund des separaten Banteils Spannring ersohwert ist und dieser keine radial elastischen Federlippen aufweist.

Nachteilig ist dabei in allen Fällen, dass solche nach dem Stand der Technik ausgebildete Lenkungslager einen hohen Montageaufwand erfordern, da die äußeren Lagerringe mit zugehörigem Federelement von der Außenhülse mit radial nach innen gerichteten Flanschen in aufwendiger Weise zu einer Baueinheit zusammengehalten werden. Es ist auch von Nachteil, dass bei solchen Lenkungslagern ein Toleranzausgleich zwischen aufnehmenden Gehäuse und Außenhülse praktisch nicht möglich ist. Es ist weiter von Nachteil, dass das Federelement nicht gegen Überbeanspruchung geschützt ist.

### Zusammenfassung der Erfindung

Der Erfindung liegt daher die Aufgabe zugrunde, ein gattungsgemäßes spiefreies Radialkugellager dahingehend weiter zu entwickeln, dass dessen Herstellung und Montage vereinfacht ist und dass ein Toleranzausgleich mit dem aufnehmenden Lagergehäuse problemlos möglich ist.

Erfindungsgemäß wird diese Aufgabe nach dem kennzeichnenden Teil von Anspruch 1 dadurch gelöst, dass die wenigstens eine Haltenase radial elastisch ist.

Der Vorteil dieser Lösung liegt insbesondere darin, dass der die äußeren Lagerringe einschließlich Federelement aufnehmende Toleranzring durch einen Spritzvorgang in einfacher Weise in unterschiedlichen Abmessungen gefertigt werden kann. Ein anderer Vorteil liegt darin, dass der Toleranzring die Montage des Gesamtlagers wesentlich vereinfacht, da Innenring, Kugelkranz, Federelement und Außenringe nur in diesen eingeschoben werden müssen. Schließlich ist auch von Vorteil, dass der Ausgleich von Abständen zwischen Lageraußenringen und aufnehmenden Gehäuse durch diesen Ring in einfacher Weise möglich ist, so dass fertigungsbedingte Maßabweichungen beim Sitz des Lagerringes im Gehäuse kein Problem sind. Schließlich werden durch den Toleranzring aus polymeren Kunststoff auftretende Schwingungen und Stoßbelastungen in wirkungsvoller Weise gedämpft. Durch die wenigstens eine radial elastischen Haltenase ist eine besonders einfache Montage gewährleistet, da beim Einschieben der äu-ßeren Lagerringe in den Toleranzring zunächst die Haltenasen radial nach außen aufgeweitet werden und nach Passieren der äußeren Lagerringe radial nach innen einfedem und so einen sicheren Zusammenhalt der gesamten Lageranordnung bewirken.

Weitere vorteilhafte Ausführungen der erfindungsgemäßen Lösung sind in den Unteransprüchen 2 bis 7 beschrieben.

So ist nach Anspruch 2 vorgesehen, dass der Toleranzring an mehren gleichmäßig voneinander beabstandeten Umfangstellen durchgehende Freistellungen aufweist, deren eine Stirnseite mit der Haltenase versehen ist.

Nach einem weiteren Merkmal der Erfindung gemäß Anspruch 3 soll der Toleranzring zur Aufnahme der äußeren Lagerringe eine abgestufte Innenbohrung aufweisen, die im Bereich des axial beweglichen äußeren Lagerringes einen größeren Durchmesser besitzt, wobei die äußeren Lagerringe gleiche radiale Abmessungen aufweisen sollen. Durch die vergrößerte Innenbohrung im Bereich des axial beweglichen äußeren Lagerringes kann dieser sich bei gleicher Größe wie der andere äußere Lagerring ungehindert bewegen. In der Größe gleiche äußere Lagerringe verringern der Kostenanteil der Lagerbaueinheit.

Nach einem weiteren zusätzlichen Merkmal gemäß Anspruch 4 ist vorgesehen, dass der Toleranzring im Bereich des beweglichen Lagerringes einen als axialen Wegbegrenzer wirkenden Vorsprung aufweist. Dieser Vorspruch sorgt in vorteilhafter Weise dafür, dass bei schwellender Belastung das Federelement in besonderer Weise geschützt ist, dass heißt, die Feder nicht auf Blockstellung beansprucht werden kann, sondern immer einen Aufnahmeraum bestimmter Größe besitzt.

Nach einem weiteren zusätzlichen Merkmal gemäß Anspruch 5 ist vorgesehen, dass der Toleranzring an seiner Mantelfläche wenigstens eine umlaufende radial hervorspringende Rippe aufweist. Die Fixierung in einer Gehäuseaufnahmebohrung ist dadurch besonders vereinfacht, da überzählige Materialteile der Rippe in einfacher Weise verquetscht werden können. Außerdem kann diese umlaufende Rippe dafür sorgen, dass die die Haltenasen tragenden durchgehenden Freistellungen abdichtbar sind.

Schließlich sind in den Ansprüchen 6 und 7 weitere Ausführungen der Erfindung: beschrieben, die in erster Linie vom jeweiligen Einbaufall abhängen. So ist nach Anspruch 6 vorgesehen, dass der innere Lagerring spanlos geformt ist und den Toleranzring in axialer Richtung überragt. Aus Anspruch 7 geht schließlich hervor, dass das Federelement eine Wellfeder, eine Tellerfeder oder ein Gummiring ist.

Die Erfindung wird an nachstehendem Ausführungsbeispiel näher erläutert.

### Kurze Beschreibung der Zeichnungen

Es zeigen:
- Figur 1: einen Längsschnitt durch ein Lenkungslager nach dem bisherigen Stand der Technik,
- Figur 2: einen Längsschnitt durch ein erfindungsgemäßes Lenkungslager entlang der Linie II-II in Figur 4,
- Figur 3: eine Draufsicht auf das in Figur 2 gezeigte Lenkungslager und
- Figur 4: eine Seitenansicht des in Figur 2 gezeigten Lenkungslagers.

### Ausführliche Beschreibung der Zeichnungen

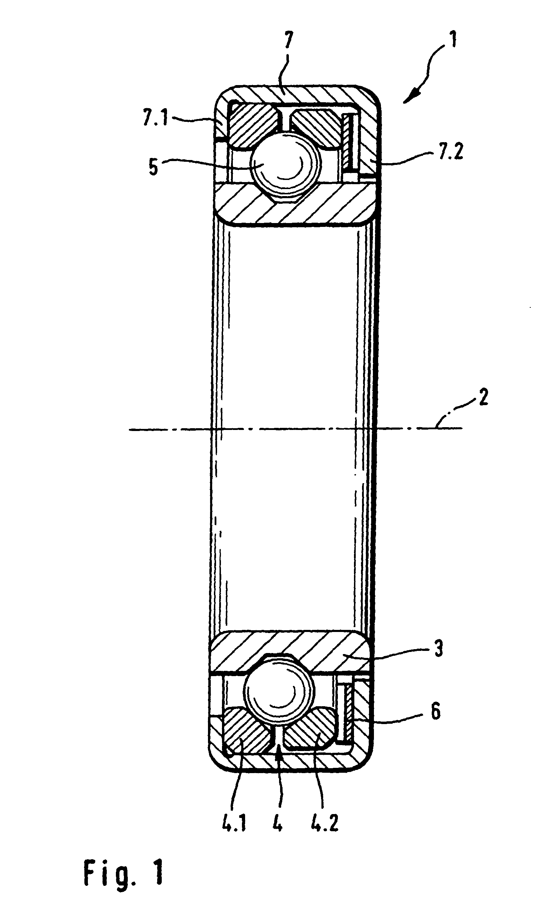

Das in Figur 1 nach dem Stand der Technik um seine Achse 2 dargestellte Lenkungslager ist als ein 4-Punkt-Kugellager 1 ausgebildet, um dessen als Massivring gestalteten inneren Lagerring 3 koaxial beabstandet der äußere Lagerring 4 angeordnet ist. Dieser setzt sich aus den beiden äußeren Teilringen 4.1 und 4.2 zusammen, die durch einen Spalt voneinander beabstandet sind und eine gemeinsame äußere Laufbahn für die Lagerkugeln 5 bilden. Für die Vorspannung im 4-Punkt-Kugellager 1 sorgt die Wellfeder 6, die den beweglichen Außenring 4.2 gegen die Lagerkugeln 5 und somit gegen den zweiten Außenring 4.1 drückt. Die Federvorspannung sollte dabei so abgestimmt werden, dass das Reibmoment im Lager nicht so hoch liegt. Auf der anderen Seite muss gewährleistet sein, dass man beim Belasten des Lenkrades keine Nachgiebigkeit in axialer Richtung spürbar ist. Das Lager 1 ist mit Hilfe der Außenhülse 7 zusammengehalten, die mit ihren beiden radial nach innen gerichteten Flanschen 7.1 und 7.2 den unbeweglichen Lageraußenring 4.1 bzw. axial beweglichen Lageraußenring 4.2 umfasst. Es liegt auf der Hand, dass der Herstellungsaufwand eines solchen Lagers aufgrund der erforderlichen Umbördelung zur Bildung des Flansches 7.1 groß ist. Darüberhinaus lässt die Darstellung erkennen, dass ein Toleranzausgleich zwischen einer Aufnahmebohrung im Gehäuse und dem Außenmantel der Hülse 7 nicht möglich ist.

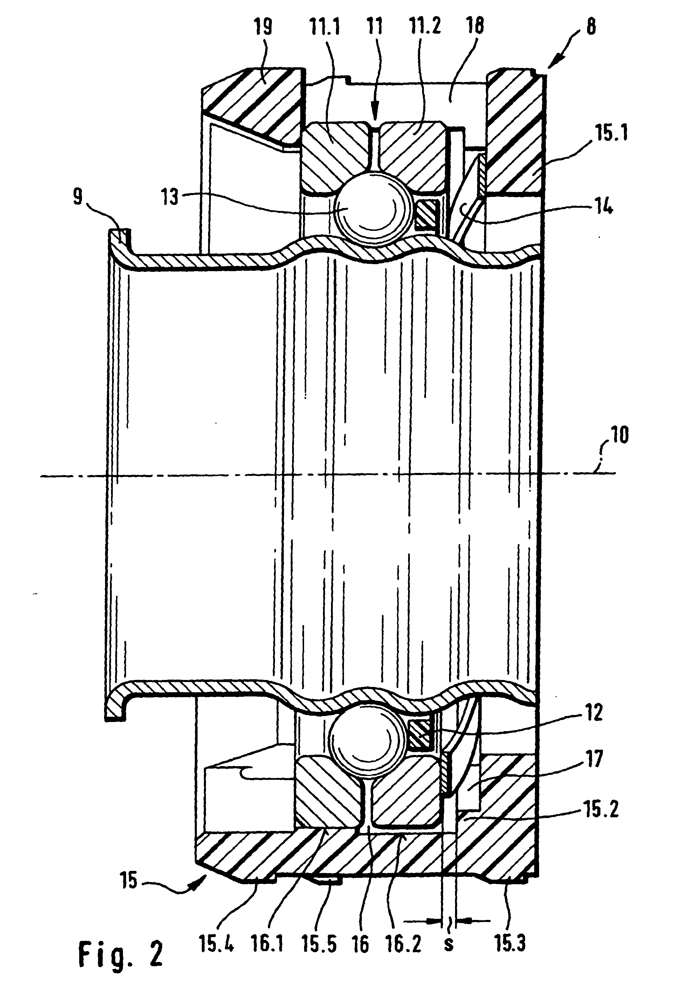

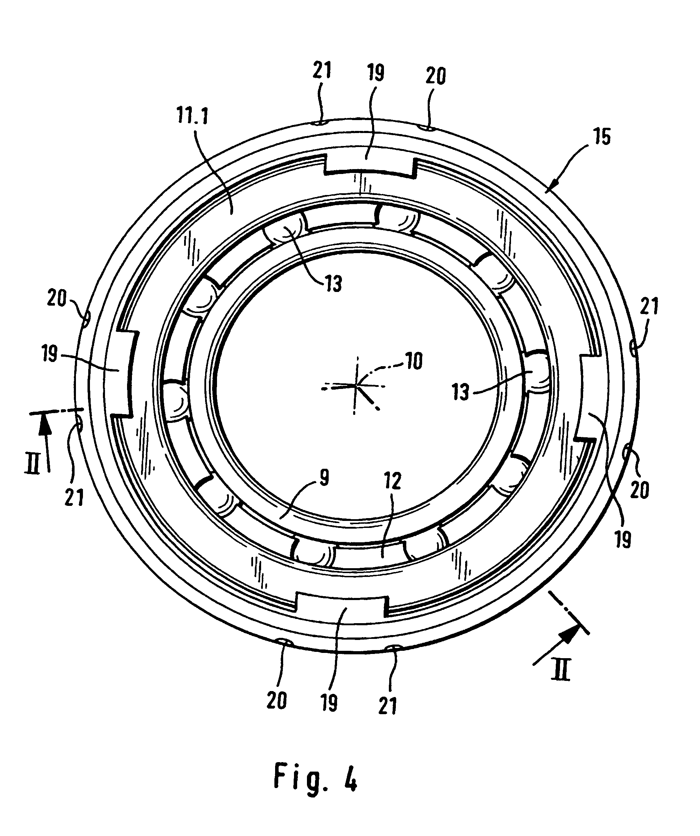

Das in den Figuren 2, 3 und 4 um seine Achse 10 dargestellte erfindungsgemäße Radialkugellager 8 besteht aus dem spanlos geformten inneren Lagerring 9 und dem äußeren Lagerring 11, wobei letztgenannter aus den beiden Teilringen 11.1 und 11.2 zusammengesetzt ist, die gemeinsam eine äußere Laufbahn für die im Käfig 12 geführten Lagerkugeln 13 bilden. Für die Vorspannung und damit für die Spielfreiheit im Lager 8 sorgt die Wellfeder 14, die den beweglichen äußeren Lagerring 11.2 gegen die Lagerkugeln 13 und somit gegen den zweiten äußeren Lagerring 11.1 preßt. Beide äußeren Lagerringe 11.1, 11.2 haben die gleiche radiale Ausdehnung. Dies ist möglich, weil gemäß Figur 2 der aus polymeren Werkstoff gefertigte Toleranzring 15 im Bereich der beiden äußeren Lagerringe 11.1, 11.2 eine abgestufte Innenbohrung 16 aufweist. Diese setzt sich aus dem Bereich 16.1 und dem Bereich 16.2 mit einem größeren Durchmesser zusammen, so dass der bewegliche äußere Lagerring 11.2 axial verschiebbar ist. Der maximale axiale Verschiebeweg des äußeren Lagerringes 11.2 ist in Figur 2 mit s bezeichnet.

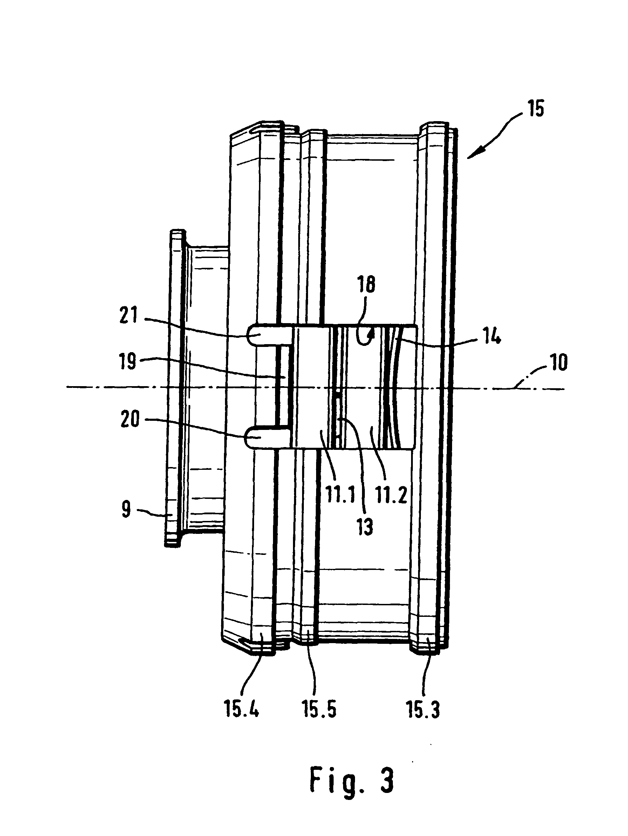

Wie die Figuren 2 und 3 weiter zeigen, ist der Toleranzring 15 auf seiner rechten Seite mit der radial nach innen zeigenden Schulter 15.1 versehen, an deren inneren Stirnseite die Wellfeder 14 anliegt. Der Toleranzring 15 ist im Bereich des axial beweglichen Lagerringes 11.2 mit dem Vorsprung 15.2 ausgestattet, der als axial Wegbegrenzer wirkt. Dies bedeutet, dass auch bei einer großen Axiallast die Wellfeder 14 nicht auf Block beansprucht werden kann, da zu ihrer Aufnahme stets der in seiner Größe nicht veränderbare Aufnahmeraum 17 vorhanden ist.

Wie den Figuren 2 bis 4 auch entnehmbar, ist der Toleranzring 15 an vier gleichmäßig voneinander beabstandeten Umfangsstellen mit je einer durchgehenden Freistellung 18 versehen, an deren linker Stirnseite unter Auslassung zweier Freiräume 20, 21 die radial elastisch ausgebildete Haltenase 19 angeformt ist, die den äußeren Lagerring 11.1 radial überdeckt. Auf diese Weise ist eine unverlierbare Baueinheit gebildet. Darüberhinaus ist der Toleranzring 15 an seiner Mantelfläche mit drei von in axialer Richtung voneinander beabstandeten Rippen 15.3, 15.4 und 15.5 versehen, die in radialer Richtung hervorstehen und den Einpreßvorgang in ein Gehäuse erleichtern.

### Bezugszeichen

- 1: 4-Punkt-Kugellager
- 2: Achse
- 3: innerer Lagerring
- 4: äußerer Lagerring
- 4.1: äußerer Lagerring
- 4.2: äußerer Lagerring
- 5: Lagerkugel
- 6: Wellfeder
- 7: Außenhülse
- 7.1: Flansch
- 7.2: Flansch
- 8: Radialkugellager
- 9: innerer Lagerring
- 10: Achse
- 11: äußerer Lagerring
- 11.1: äußerer Lagerring
- 11.2: äußerer Lagerring
- 12: Käfig
- 13: Lagerkugel
- 14: Wellfeder
- 15: Toleranzring
- 15.1: Schulter
- 15.2: Vorsprung
- 15.3: Rippe
- 15.4: Rippe
- 15.5: Rippe
- 16: Innenbohrung
- 16.1: Bereich
- 16.2: Bereich
- 17: Aufnahmeraum
- 18: Freistellung
- 19: Haltenase
- 20: Freiraum
- 21: Freiraum
- s: axialer Verschiebeweg

## Patentansprüche

1. Spielfreies Radialkugellager (8) mit einem inneren (9) und zwei äußeren voneinander beabstandeten Lagerringen (11.1,11.2), die eine gemeinsame Außenlaufbahn bilden , wobei einer der äußeren Lagerringe (11.2) von einem Federelement mit einer axial gerichteten Kraft beaufschlagt ist, so dass die beiden äußeren Lagerringe (11.1,11.2) federnd gegeneinander gedrückt werden, und wobei äußere Lagerringe (11.1,11.2) sowie Federelement von einem diese zu einer Baueinheit zusammenhaltenden Element umfaßt sind, das als ein Toleranzring (15) aus einem Kunststoff ausgebildet ist, der an einem Ende mit einer Schulter (15.1), die am Federelement (14) axial anliegt, und an seinem anderen Ende mit wenigstens einer Haltenase (19), die an einem (11.1) der äußeren Lagerringe (11.1,11.2) axial anliegt, die beiden äußeren Lagerringe (11.1,11.2) und das Federelement (14) axial zusammenhält, **dadurch gekennzeichnet, dass** die wenigstens eine Haltenase (19) radial elastisch ist.

2. Radialkugellager (8) nach Anspruch 1, **dadurch gekennzeichnet, dass** der Toleranzring (15) an mehreren gleichmäßig voneinander beabstandeten Umfangsstellen durchgehende Freistellungen (18) aufweist, deren eine Stirnseite mit der Haltenase (19) versehen ist.

3. Radialkugellager (8) nach Anspruch 1, **dadurch gekennzeichnet, dass** der Toleranzring (15) zur Aufnahme der äußeren Lagerringe (11.1,11.2) eine abgestufte Innenbohrung (16) aufweist, die im Bereich (16.2) des axial beweglichen äußeren Lagerringes (11.2) einen größeren Durchmesser besitzt und dass die äußeren Lagerringe (11.1,11.2) gleiche radiale Abmessungen aufweisen.

4. Radialkugellager (8) nach Anspruch 1, **dadurch gekennzeichnet, dass** der Toleranzring (15) im Bereich des beweglichen Lagerringes (11.2) einen als axialen Wegbegrenzer wirkenden Vorsprung (15.2) aufweist.

5. Radialkugellager (8) nach Anspruch 1, **dadurch gekennzeichnet, dass** der Toleranzring (15) an seiner Mantelfläche wenigstens eine umlaufende radial hervorspringende Rippe (15.1,15.2,15.3) aufweist.

6. Radialkugellager (8) nach Anspruch 1, **dadurch gekennzeichnet, dass** der innere Lagerring (9) spanlos geformt ist und den Toleranzring (15) in axialer Richtung überragt.

7. Radialkugellager (8) nach Anspruch 1, **dadurch gekennzeichnet, dass** das Federelemment eine Wellfeder (1), eine Tellerfeder oder ein Gummiring ist.

## Claims

1. Backlash-free radial ball bearing (8) having an inner bearing ring (9) and two outer spaced-apart bearing rings (11.1, 11.2) which form a common outer raceway, an axially directed force being applied to one of the outer bearing rings (11.2) by a spring element, so that the two outer bearing rings (11.1, 11.2) are pressed against one another in a spring-loaded manner, the outer bearing rings (11.1, 11.2) and the spring element being enclosed by an element which holds said bearing rings (11.1, 11.2) and said spring element together to form a construction unit and which is designed as a plastic tolerance ring (15) which holds the two outer bearing rings (11.1, 11.2) and the spring element (14) together axially at one end by means of a shoulder (15.1), which bears axially against the spring element (14), and at its other end by means of at least one retaining lug (19), which bears axially against one (11.1) of the outer bearing rings (11.1, 11.2), **characterized in that** the at least one retaining lug (19) is radially elastic.

2. Radial ball bearing (8) according to Claim 1, **characterized in that** the tolerance ring (15) has through-openings (18) at a plurality of uniformly spaced-apart circumferential locations, the one front end of which openings (18) is provided with the retaining lug (19).

3. Radial ball bearing (8) according to Claim 1, **characterized in that** the tolerance ring (15) has a stepped inner bore (16) for accommodating the outer bearing rings (11.1, 11.2), this inner bore (16) having a larger diameter in the region (16.2) of the axially movable outer bearing ring (11.2), and **in that** the outer bearing rings (11.1, 11.2) have the same radial dimensions.

4. Radial ball bearing (8) according to Claim 1, **characterized in that**, in the region of the movable bearing ring (11.2), the tolerance ring (15) has a projection (15.2) acting as an axial travel limiter.

5. Radial ball bearing (8) according to Claim 1, **characterized in that** the tolerance ring (15) has at least one encircling, radially projecting rib (15.1, 15.2, 15.3) on its lateral surface.

6. Radial ball bearing (8) according to Claim 1, **characterized in that** the inner bearing ring (9) is formed by non-cutting shaping and projects beyond the tolerance ring (15) in the axial direction.

7. Radial ball bearing (8) according to Claim 1, **characterized in that** the spring element is a wave spring (1), a disc spring or a rubber ring.

## Revendications

1. Palier à billes radial (8) sans jeu comportant une bague de palier intérieure (9) et deux bagues de palier extérieures (11.1, 11.2) distantes l'une de l'autre, lesquelles forment un chemin de roulement extérieur commun, une des bagues de palier extérieures (11.2) étant soumise à une force dirigée dans le sens axial exercée par un élément ressort, de sorte que les deux bagues de palier extérieures (11.1, 11.2) soient pressées élastiquement l'une contre l'autre, et les bagues de palier extérieures (11.1, 11.2) ainsi que l'élément ressort étant enserrés par un élément maintenant ceux-ci ensemble de manière à former une unité de construction, lequel élément est conformé en tant que bague de tolérance (15) en matière synthétique, laquelle maintient ensemble dans le sens axial les deux bagues de palier extérieures (11.1, 11.2) et l'élément ressort (14) au moyen d'un épaulement (15.1) à une extrémité, lequel repose axialement contre l'élément ressort (14), et d'au moins un ergot de retenue (19) à son autre extrémité, lequel repose axialement contre une (11.1) des bagues de palier extérieures (11.1, 11.2), **caractérisé en ce qu'**au moins un des ergots de retenue (19) est élastique dans le sens radial.

2. Palier à billes radial (8) selon la revendication 1, **caractérisé en ce que** la bague de tolérance (15) présente en plusieurs endroits de sa circonférence distants de façon régulière les uns des autres, des évidements (18) continus, dont un côté frontal est pourvu de l'ergot de retenue (19).

3. Palier à billes radial (8) selon la revendication 1, **caractérisé en ce que** la bague de tolérance (15) présente un alésage intérieur (16) étagé destiné à recevoir les bagues de palier extérieures (11.1, 11.2), lequel possède un diamètre supérieur dans la zone (16.2) de la bague de palier extérieure (11.2) mobile dans le sens axial et **en ce que** les bagues de palier extérieures (11.1, 11.2) présentent des dimensions radiales identiques.

4. Palier à billes radial (8) selon la revendication 1, **caractérisé en ce que** la bague de tolérance (15) présente dans la zone de la bague de palier (11.2) mobile, une saillie (15.2) agissant en tant que limiteur de déplacement axial.

5. Palier à billes radial (8) selon la revendication 1, **caractérisé en ce que** la bague de tolérance (15) présente sur sa surface d'enveloppe, au moins une nervure (15.1, 15.2, 15.3) circulaire en saillie dans le sens radial.

6. Palier à billes radial (8) selon la revendication 1, **caractérisé en ce que** la bague de palier intérieure (9) est formée par moulage et dépasse de la bague de tolérance (15) dans le sens axial.

7. Palier à billes radial (8) selon la revendication 1, **caractérisé en ce que** l'élément ressort est une rondelle-ressort ondulée (1), un ressort Belleville ou une bague en caoutchouc.
